# EUROPÄISCHE PATENTSCHRIFT

(11) **EP 1 728 617 B1**
(45) Veröffentlichungstag und Bekanntmachung des Hinweises auf die Patenterteilung: **23.03.2011**
(21) Anmeldenummer: 06011280.2
(22) Anmeldetag: 31.05.2006
(51) Int. Cl.: B29C 57/02

(54) **Verfahren zur Herstellung einer Rohrendsteckmuffe sowie Sickeneinsatz für eine Rohrendsteckmuffe**
Process for producing a plug socket for pipe ends and beaded insert for a pipe end plug socket
Procédé pour fabriquer des manchons emboitables pour des extrémités de tubes et insert à bourrelet pour un tel manchon

(30) Priorität: 02.06.2005 DE 102005025460
(43) Veröffentlichungstag der Anmeldung: 06.12.2006
(73) Patentinhaber: Poloplast GmbH & Co. KG, 4060 Leonding (AT)
(72) Erfinder: Borth, Rainer, 4490 St. Florian (AT); Schuster, Dieter, 4063 Lörsching (AT)
(74) Vertreter: Weber, Joachim

(56) Entgegenhaltungen:
- DE-A1- 2 462 186
- GB-A- 1 003 944
- GB-A- 1 175 503
- GB-A- 1 183 881
- US-A- 4 643 658

## Beschreibung

Die Erfindung bezieht sich auf ein Verfahren zur Herstellung einer Rohrendsteckmuffe aus einem thermoplastischen Material gemäß dem Oberbegriff des Verfahrensanspruchs.

Weiterhin bezieht sich die Erfindung auf einen ein- oder mehrstückig ausgeführten Sickeneinsatz bzw. Formteil, der mit der Rohrendsteckmuffe eine ringförmige Sicke bildet und in der ein Standard-Dichtring eingelegt werden kann, wobei der Sickeneinsatz bei dem Verfahren zur Herstellung einer Sicke als verlorener Formteil an der Innenwandung der Rohrsteckmuffe verpresst wird.

Aus dem Stand der Technik sind Rohrsteckmuffen in unterschiedlichsten Ausgestaltungsformen bekannt. Dabei wird ein freies Ende (Spitzende) eines Rohres in die Muffe eingesteckt. Zur Abdichtung ist üblicherweise ein Dichtring vorgesehen.

Der Stand der Technik zeigt Ausgestaltungsformen, bei welchen die Sicke mittels Druckluft durch Aufblasen der zuvor auf Erweichungstemperatur gebrachten Rohrwand in eine äußere Form hergestellt wird. Bei dieser Art der Sickenherstellung ergeben sich je nach Wanddicke besonders große Radien an den Übergängen Sicke-Muffe. In einer weiteren Ausgestaltungsform wird die Sicke durch einen "Spreizkern" hergestellt, bei dem radial ausschiebbare Sickenformelemente die plastisch formbare Rohrwand von innen gegen eine äußere Form drücken. Der Spreizkern kann auch in axial verschiebbarer Weise die Breite der Sicke regulieren und derart den Übergangsradius etwas kleiner stauchen. Kombinationen beider Verfahren ergeben dann weitere Ausgestaltungsformen einer Sicke. Damit können zwar kleinere Sickenradien, als im sogenannten Blasverfahren erreicht werden, jedoch wird durch den Biege- und Stauchvorgang der Rohrwand immer ein Radius vorhanden sein.

Der Nachteil solcher Sicken ist, dass die Herstellungstoleranzen der Sickenbreite im Bereich von einigen mm liegen. Dadurch besteht die Gefahr, dass der Dichtring nicht zuverlässig in der Sicke sitzt und die Übergangsradien so groß ausfallen, sodass nur mehr eine geringe Sickenflankenfläche verbleibt, auf der sich der Dichtring nicht voll abstützen kann, so dass er beim Einschieben des Rohres oder bei Längsbewegungen des Rohres relativ zu der Rohrendsteckmuffe beschädigt oder aus der Sicke ausgeschoben werden kann, wodurch eine undichte Verbindung entsteht.

Der Dichtring sitzt zudem in einer zu breiten Sicke relativ locker, wodurch er beim Transport des Rohres herausprellen und verloren gehen kann.

Zur Problembehebung des Ausschiebens und Ausprellens des Dichtrings aus der Sicke sind mehrere Lösungen bekannt.

So werden Dichtringe mit Verstärkungseinlagen eingesetzt, die den Nachteil haben, dass diese nicht aus der Sicke herausnehmbar oder ersetzbar sind. Zudem können sich bei zu großen Sickentoleranzen Schmutzpartikel hinter dem Dichtring ansetzen, die die Dichtfunktion beeinträchtigen.

Es wurde weiters vorgeschlagen, die Bildung der Sicke direkt durch einen Dichtring vorzunehmen (EP 0 685 317 B1). Dies hat den Nachteil, dass beim Formen der Sicke erhebliche Quetschkräfte auf den Dichtring wirken, so dass dieser in unerwünschter Weise verformt werden kann. Der Dichtring ist fest mit der Sicke verbunden und nicht herausnehmbar, somit ist bei einem defekten Dichtring das gesamte Rohr auszutauschen, was ein erheblicher Kostennachteil ist. Eine alternative Vorgehensweise beschreibt die EP 0 243 331 B1. Dabei ist der Dichtungsring mit einem Verstärkungsbereich versehen, der die Sickenbildung unterstützt und Beschädigungen des Dichtungsringes vermeiden soll. Ein derartiger Dichtungsring ist teuer in der Herstellung. Weiterhin kann eine korrekte Sickenbildung ebenfalls nicht gewährleistet werden. Auf die Verwendung dieses Dichtungsrings bezieht sich die EP 1 417 088 B1.

Die DE-AS 1 604 574 zeigt eine Rohrendsteckmuffe, bei welcher feste Ringe vorgesehen sind. Zwischen diese festen Ringe werden Dichtungen eingelegt. Dies erfolgt jedoch synchron während der Fertigung der Muffe. Ein nachträgliches Einlegen der Dichtung in eine Ringnut ist somit nicht vorgesehen.

Bei der Konstruktion der DE-AS-1 266 588 wird ein starrer Verstärkungsring in die fertige Steckmuffe eingelegt, woraufhin das freie Ende der Muffe umgebogen wird. In den Verstärkungsringen kann auch ein Dichtungsringkörper eingesetzt werden.

Die Konstruktion der DE-OS 1 753 629 ähnelt der Konstruktion der DE-AS 1 604 574. Auch hierbei sind Stützringe vorgesehen, zwischen welche ein elastischer Füllring eingeschoben ist. Die Teile werden jedoch bei der Herstellung gemeinsam auf den Kern aufgeschoben. Dabei ist zu beachten, dass weder die Stützringe noch der Füllring in axialer Richtung gegen Verschieben gesichert sind. Der elastische Füllring wird nachträglich entfernt und durch einen Dichtungsring ersetzt.

Aus der EP 1 041 334 A1 ist eine Rohrendsteckmuffe bekannt, bei welcher eine Hülse eingelegt wird. Der Dichtungsring wird nachträglich eingelegt.

Aus der AT-PS 290 227 ergibt sich im Wesentlichen dieselbe Konstruktion wie bei der DE-OS 1 753 629. Wie sich ergibt, erfolgt die Montage sowohl des elastischen Dichtungsrings als auch des festen Rings gleichzeitig bei der Herstellung der Rohrendsteckmuffe.

Die US-A-4 643 658 beschreibt ein Verfahren zur Herstellung einer Rohrendmuffe mit einem expandierbaren Dorn, welcher gespreizt wird, um beim Einführen des Dorns und bei der nachfolgenden Formung eine Dichtung einlegen zu können.

Die GB-A-1 003 944 zeigt einen Sickeneinsatz, welcher bereits in der Rohrendmuffe positioniert ist und eine Nut zur Einlegung eines Dichtringes aufweist. Hinsichtlich des Herstellverfahrens ist nichts ausgesagt.

Die japanische Veröffentlichung JP 06-159563 AA zeigt lediglich, dass ein Dichtungsring in einen metallischen Stützring eingelegt ist.

Der Erfindung liegt die Aufgabe zugrunde, ein Verfahren zu schaffen, welche bei einfacher Anwendung und kostengünstiger Durchführung die Nachteile des Standes der Technik vermeidet und die Herstellung einer funktionsfähigen Rohrendsteckmuffe ermöglichet.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist hinsichtlich des Verfahrens somit vorgesehen, dass zur Herstellung der Rohrendsteckmuffe aus einem thermoplastischen Material das Rohrende zunächst auf Erweichungstemperatur erwärmt wird. Nachfolgend wird ein Aufweitdorn eingebracht, welcher üblicherweise kegelförmig oder zylindrisch ist, um die Durchmessererweiterung, welche für die Sickenbildung sowie für die Muffenbildung benötigt wird, zu realisieren. In einem weiteren Schritt wird das Rohrende zusammen mit dem Formungselement (Dorn mit Sickeneinsatz) zur Ausbildung einer einen Dichtungsring aufnehmenden Sicke umgeformt. Anschließend erfolgt ein Verpressen in die gewünschte Endform. Erfindungsgemäß ist dabei vorgesehen, dass das Formungselement in Form eines Dorns ausgebildet ist, auf welchem ein ringförmiger Sickeneinsatz angeordnet ist, welcher bei einem nachfolgenden Entfernen des Dorns in der durch den Sickeneinsatz ausgebildeten Sicke verbleibt.

Die aus dem Stand der Technik vorbekannten Verfahren sind nur mit PVC-Werkstoffen durchführbar, da diese einen ausgeprägten Memory-Effekt haben. Im Gegensatz hierzu werden erfindungsgemäß teilkristalline Materialien verwendet, beispielsweise Polyolefine. Bei diesen Werkstoffen ist es, wie erfindungsgemäß vorgesehen, erforderlich, diese zur Fertigstellung der Rohrendsteckmuffe zu pressen (Pressdruck von der Außenseite), da der Memory-Effekt dieser teilkristallinen Werkstoffe oder Materialien sehr schwach ist.

Die Erfindung sieht somit grundsätzlich zwei unabhängige Arbeitsschritte vor, nämlich das Aufweiten des Rohr-Endbereichs sowie das Fertig-Pressen der Rohrmuffe.

Erfindungsgemäß erfolgt somit die endgültige Formgebung des radial innenliegenden Bereichs der Sicke durch den Sickeneinsatz selbst. Dieser bildet somit das Formelement zum Ausbilden der Sicke. Die Außenkontur der Sicke wird durch Pressen oder auf andere Weise geformt, so wie dies aus dem Stand der Technik bekannt ist.

Alternativ kann die Sicke mit Übermaß auch durch Blasformen hergestellt werden. Nachfolgend wird der Sickeneinsatz eingelegt und die Rohrendmuffe auf die endgültige Form verpresst.

Damit kann eine Sicke für eine Rohrendsteckmuffenverbindung hergestellt werden, die eine möglichst große plane Flankenringfläche aufweist und mit kleinsten Sickenradien und mit möglichst geringen Toleranzen herstellbar ist, damit ein handelsüblicher, genormter und somit austauschbarer SBR, NBR oder EPDM-Dichtring spielfrei in der Sicke einsetzbar ist und der beim Einstecken eines Rohrspitzendes in die Steckmuffe nicht aus der Sicke ausgeschoben werden kann.

Durch den Sickeneinsatz ist es möglich, auf das Einlegen des Dichtungsrings während des Formvorganges zu verzichten. Hierdurch wird vermieden, dass der Dichtungsring in unerwünschter Weise verformt oder gequetscht wird. Weiterhin bietet der Sickeneinsatz die Möglichkeit, exakte Anlageflächen sowie eine exakte geometrische Ausgestaltung zu erzielen. Bei einem nachfolgenden Einlegen des Dichtungsrings kann dieser somit exakt positioniert werden. Hierdurch wird der korrekte Sitz des Dichtungsrings gewährleistet. Die Gefahr, dass dieser sich löst oder unbeabsichtigt verformt wird, wird somit beseitigt bzw. zumindest erheblich eingeschränkt.

Die Verwendung eines starren, elastisch - im Vergleich zu dem Dichtungsring - nicht verformbaren Sickeneinsatzes ermöglicht auch die exakte Formung der Sicke des Rohres bzw. der Rohrendsteckmuffe, da zum Verpressen größere Kräfte aufgebracht werden können, als beim Einlegen nur eines elastischen Dichtungsrings.

Der Dichtungsring ist somit erfindungsgemäß spielfrei gelagert und ausschubsicher. Durch die exakte Positionierung des Dichtungsrings ergeben sich geringere Einschubkräfte beim Einschieben eines Rohrs in die Rohrendsteckmuffe.

Weiterhin ist erfindungsgemäß vorteilhaft, dass übliche Dichtungsringe einsetzbar sind, welche keine zusätzlichen Stützteile, Stützringe oder Ähnliches benötigen, die bruchgefährdet sind und zusätzliche erhöhte Herstellungskosten mit sich bringen.

Die Erfindung gestattet es, den Dichtungsring zu demontieren und auszutauschen. Es ist vorgesehen, dass der Dichtungsring auswechselbar ist. Dies ist insbesondere in der Praxis von großer Wichtigkeit, da die Ringnut, in welche der Dichtungsring eingelegt ist, nach dessen Entnahme gesäubert und ausgewischt werden kann. Bei der Montage kann dann der Dichtungsring in exakter Positionierung eingeschoben werden. Dies stellt sicher, dass die Dichtungsfunktion in ordnungsgemäßer Weise erfüllt wird. Es ist somit auf der Baustelle möglich, den Dichtungsring zu entnehmen, zu säubern und entsprechend einzusetzen, um beispielsweise Verschmutzungen, Fremdpartikel oder Ähnliches zu entfernen. Dies ist bei den aus dem Stand der Technik bekannten Konstruktionen nicht möglich, da dort der Dichtungsring fest während der Herstellung der Rohrendsteckmuffe eingesetzt und verankert wird und nachträglich nicht mehr ausgewechselt werden kann.

Um die Herstellung und Verpressung der Rohrendsteckmuffe in optimaler Weise vorzunehmen, ist vorgesehen, dass der Dorn, welcher das Formungselement bildet, einen größeren Durchmesser aufweist, als der zu erzielende Innendurchmesser der fertigen Rohrendsteckmuffe. Nach Entfernen des Formungselements (Entnahme des Dorns) kann dann das Fertigpressen von außen mittels Außenbacken, gegebenenfalls gegen einen zweiten, kleineren Dorn, erfolgen. Dieser Vorgang dient zum Fertigpressen der Rohrendsteckmuffe und kühlt gleichzeitig durch Kontaktkühlung das Material der Rohrendsteckmuffe. Nachfolgend erfolgt dann erfindungsgemäß das Einlegen des Dichtungsrings. Zur Ausbildung der Sicke wird erfindungsgemäß der Sickeneinsatz verwendet, dieser verbleibt in der fertiggestellten Rohrendsteckmuffe.

Wie sich aus der obenstehenden Beschreibung ergibt, ist es erfindungsgemäß somit entweder möglich, das Fertigpressen mittels eines zweiten, kleineren Dorns zu realisieren oder, was ebenfalls besonders vorteilhaft ist, das Fertigpressen ohne innere Abstützung und somit ohne einen innenliegenden, weiteren Dorn durchzuführen. Somit erfolgt das Fertigpressen lediglich von außen mittels der Außenbacken, wobei der Sickeneinsatz eine ausreichende Stabilität aufweist, um die exakte Form der Rohrendsteckmuffe zu realisieren.

Erfindungsgemäß ist es somit möglich, eine materialmäßige Unterscheidung oder Trennung zwischen dem Sickeneinsatz und dem Dichtungsring vorzunehmen. Der Sickeneinsatz wird aus einem formstabilen, harten Kunststoffmaterial gefertigt, während der Dichtungsring aus einem weichen, elastischen Material hergestellt wird.

Durch die erfindungsgemäße Konstruktion ist sichergestellt, dass der Dichtungsring ausschubsicher gelagert ist, so wie sich dies auch aus der nachfolgenden Beschreibung ergibt. Bei einem Einschieben eines Spitzendes eines Rohres in die erfindungsgemäße Rohrendsteckmuffe kann somit der Dichtungsring nicht in unbeabsichtigter Weise gelöst und aus der Sickennut ausgeschoben werden.

Der erfindungsgemäß verwendete Sickeneinsatz ist kostengünstig als Spritzgussteil oder als Drehteil aus einem extrudierten Rohr-Halbzeug herstellbar. Vorteilhaft erweist es sich dabei, dass das Material des Sickeneinsatzes unabhängig von dem Rohrmaterial gewählt werden kann.

Ein weiterer Vorteil besteht erfindungsgemäß darin, dass durch die Verwendung unterschiedlicher Sickeneinsätze eine Anpassung an die jeweiligen Gegebenheiten möglich ist. Erfindungsgemäß versteht es sich, dass sowohl einer als auch mehrere Dichtungsringe in einen Sickeneinsatz einlegbar sind. Auch die Dimensionierung des Sickeneinsatzes ist den jeweiligen Anforderungen in leichter Weise anpassbar, beispielsweise hinsichtlich des Flankenwinkels sowie der jeweiligen, Radien.

In einer günstigen Weiterbildung der Erfindung ist vorgesehen, dass zwischen dem Sickeneinsatz und dem Rohr (im Bereich der zu bildenden Rohrsicke) Dichtmittel eingebracht werden, welche eine Abdichtung zwischen dem Sickeneinsatz und dem Rohrmaterial bewirken. Die Dichtmittel können in Form einer Dichtung oder in Form eines Klebers (Schmelzkleber) eingebracht werden. Es ist jedoch auch möglich, beispielsweise eine Ultraschall-oder Laserverschweißung oder Ähnliches vorzusehen. Hierdurch wird sichergestellt, dass der Sickeneinsatz nicht von einem Fluid hinterspült wird.

Bei dem erfindungsgemäßen Verfahren kann die Sicke entweder vollständig durch den Sickeneinsatz geformt werden. Dies bedeutet, dass der Dichtungsring in eine Ringnut des Sickeneinsatzes eingelegt wird. Es ist jedoch auch möglich, die Sicke nur teilweise durch den Sickeneinsatz herzustellen, wobei dann der Dichtungsring axial neben den Sickeneinsatz montiert werden kann.

In diesem Fall ist es bei der Fertigung der Muffe vorteilhaft, den Dichtring mit dem Sickeneinsatz gemeinsam einzubringen, um die Position des Sickeneinsatzes in der dann breiteren Sicke zu sichern.

Der Sickeneinsatz selbst ist ringförmig ausgebildet und weist zumindest eine Ringnut zur Einbringung zumindest eines Dichtungsringes auf. Der Sickeneinsatz ist dabei bevorzugterweise im Querschnitt im Wesentlichen mit einer trapezförmigen Außenkontur versehen. Zum festen Sitz des Rohrendes kann es beitragen, wenn zusätzlich ein Klemm- oder Krallenring verwendet wird. Dieser kann in einer nach innen weisenden Klemmringnut des Sickeneinsatzes montiert werden. Dabei wird der Klemm- oder Krallenring bevorzugterweise nach dem Ausformen der Sicke als geteilter Klemm- oder Krallenring eingeschoben.

Der Sickeneinsatz kann beispielsweise mit einer, bezogen auf seine axiale Länge, im Wesentlichen mittig angeordneten Ringnut versehen sein, so dass sich ein im Wesentlichen U-förmiges Querschnittsprofil des Sickeneinsatzes ergibt. In einer alternativen Ausgestaltung ist es jedoch auch möglich, im mittleren Bereich des Sickeneinsatzes einen lösbaren Distanzring anzuordnen, so dass der Sickeneinsatz in einen vorderen und einen hinteren Einsatzteil getrennt werden kann. Dies hat den Vorteil, dass sich eine bis zu dem Material der Rohrendsteckmuffe erstreckende Nut ergibt, so dass zwischen Sickeneinsatz und Sickengrund kein zusätzliches Dichtungsmittel erforderlich ist, da der Dichtungsring selbst sowohl zum eingesteckten Rohr als auch zum Material der Rohrmuffe hin eine Dichtfunktion übernimmt. Der Distanzring kann auch durch einen lösbaren Dichtungsring ersetzt werden.

Es ist vorgesehen, dass der Sickeneinsatz an seinem radial äußeren Bereich mit einer Konturierung versehen ist, welche beim Fertigpressen der Rohrendsteckmuffe mit dem Material der Rohrendsteckmuffe in formschlüssigen Kontakt kommt. Somit erfolgt eine axiale Sicherung des Sickeneinsatzes. Es wird hierdurch verhindert, dass beim Entnehmen des Dichtungsringes der Sickeneinsatz axial verrutscht und dadurch ein Wiedereinlegen des Dichtungsringes verhindert. Die Konturierung kann in Form von Zacken, um den Umfang verteilten Lamellen, Rippen, Ringnuten oder Ähnlichem ausgebildet sein. Bevorzugterweise ist die Konturierung an einem zylindrischen Außenbereich des Sickeneinsatz-Ringes vorgesehen.

Im Folgenden wird die Erfindung anhand von Ausführungsbeispielen in Verbindung mit der Zeichnung beschrieben. Dabei zeigt:
- Fig. 1: eine vereinfachte Teil-Längs-Ansicht einer erfindungsgemäßen Rohrendsteckmuffe im montierten Zustand,
- Fig. 2: ein weiteres Ausführungsbeispiel in einer Ansicht analog Fig. 1,
- Fig. 3a: ein weiteres Ausführungsbeispiel in analoger Ansicht der Fig. 1,
- Fig. 3b: ein weiteres Ausführungsbeispiel in analoger Ansicht der Fig. 1,

- Fig. 3c: ein weiteres Ausführungsbeispiel in analoger Ansicht der Fig. 1,
- Fig. 3d: ein weiteres Ausführungsbeispiel in analoger Ansicht der Fig. 1,
- Fig. 4: eine Abfolge unterschiedlicher Herstellungsschritte zur Herstellung der erfindungsgemäßen Rohrendsteck-muffe,
- Fig. 5: eine weitere Verfahrensvariante zur Herstellung der erfindungsgemäßen Rohrendsteckmuffe,
- Fig. 6: eine weitere Teil-Längs-Schnittansicht, analog den Fign. 1 bis 3, eines weiteren Ausführungsbeispiels der Erfindung, und
- Fig. 7: eine weitere Ansicht, in ähnlicher Darstellung wie Fig. 6, eines weiteren Ausführungsbeispiels.

In den unterschiedlichen Ausführungsbeispielen sind gleiche Teile mit gleichen Bezugsziffern bezeichnet.

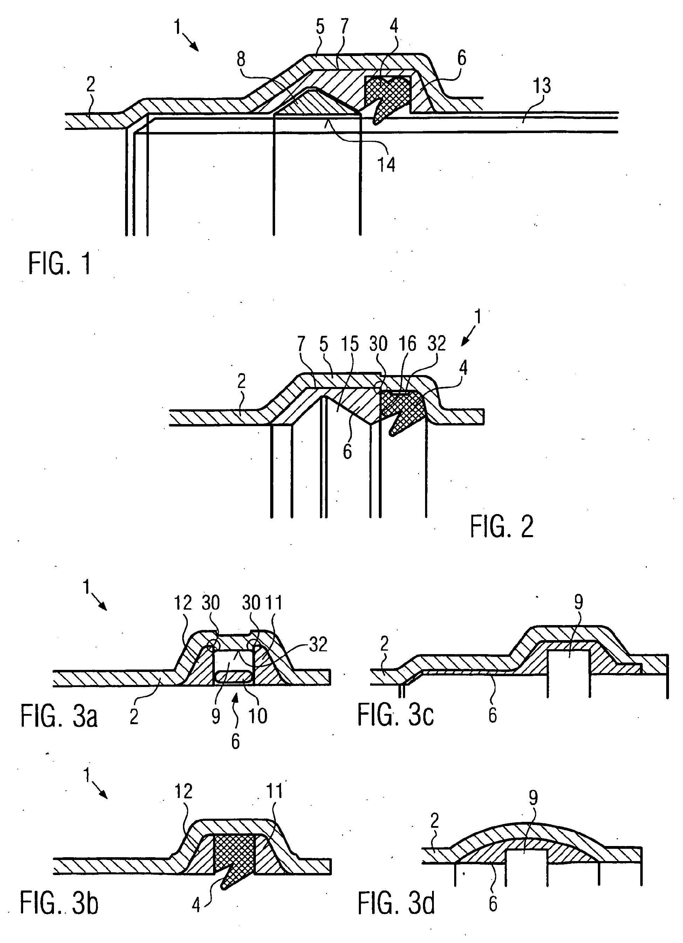

Die Fig. 1 zeigt ein Rohrende 2, welches mit einer Rohrendsteckmuffe 1 versehen ist. In die Rohrendsteckmuffe 1 ist ein Rohr 13 eingeschoben, wobei zum Zwecke der besseren Darstellung ein Dichtungsring 4 in einem nicht-verformten Zustand gezeigt ist.

Die Rohrendsteckmuffe 1 umfasst eine Sicke 5, in welcher ein Sickeneinsatz 6 angeordnet ist. Dieser weist im Schnitt eine im Wesentlichen trapezförmige Außenkontur auf und ist mit einer Ringnut versehen (kein Bezugszeichen), in welche der Dichtungsring 4 eingelegt ist.

Zusätzlich ist der Sickeneinsatz mit einer weiteren Ringnut versehen, in welcher ein Klemmring 8 angeordnet sein kann. Dieser kann an seiner radial inneren Seite 14 mit einer Verzahnung versehen sein oder mit einem reibungserhöhenden Material (beispielsweise Korund) belegt sein.

Mit dem Bezugszeichen 7 ist ein Dichtmittel oder der zu verschweißende Bereich bezeichnet, welches beispielsweise als Schmelzkleber-Schicht oder Dichtring ausgebildet sein kann.

Vorteilhaft ist, wenn die axiale Länge der Ringnut, in welche der Dichtungsring 4 eingelegt ist, geringfügig kleiner ist, als die axiale Länge des unverformten Dichtungsrings 4, so dass dieser fest sitzend mit einer leichten Vorspannung in dem Sickeneinsatz 6 aufgenommen ist.

Die Fig. 2 zeigt eine Ausgestaltungsvariante, bei welcher an dem Sickeneinsatz 6 weiterhin, wie bei dem Ausführungsbeispiel der Fig. 1, eine Ringnut 15 zur Aufnahme eines Klemmrings 8 ausgebildet ist. Im Unterschied zu dem Ausführungsbeispiel der Fig. 2 ist jedoch der Sickeneinsatz 6 nicht über die gesamte axiale Länge der Sicke vorgesehen. Vielmehr endet dieser an einer Begrenzungsfläche 16, welche zur präzisen Anlage des Dichtrings 4 dient. Der Dichtring 4 erstreckt sich somit von der Oberfläche eines nicht dargestellten Rohrs 13 bis zur radial innenliegenden Wandung der Sicke der Rohrendsteckmuffe. Der Einsatz stützt sich auf der umlaufenden Sickenkante 30 ab (Axialrichtung).

Bei dem Ausführungsbeispiel der Fig. 3a ist der Sickeneinsatz in einen vorderen Einsatzteil 11, einen Distanzring 10 sowie einen hinteren Einsatzteil 12 unterteilt. Der Distanzring 10 kann nach erfolgter Herstellung der Sicke 1 der Rohrendsteckmuffe entfernt werden, um eine Ringnut 9 auszubilden, in welche ein Dichtungsring 4 einlegbar ist. Der Dichtungsring 4 weist somit zwei Positionsflächen an den beiden Einsatzteilen 11, 12 auf, und dichtet zudem in radialer Richtung zwischen einem einzuschiebenden, nicht dargestellten Rohr und der Innenfläche der Sicke 1 der Rohrendsteckmuffe.

Fig. 3b zeigt ein Beispiel mit einem herausnehmbaren Dichtring als Distanzhalter für zwei Flanschringe 11.

Die Fig. 3c und 3d zeigen Ausgestaltungsvarianten, bei welchen die Muffe vollständig durch den Sickeneinsatz 6 geformt wird. Bei dem Ausführungsbeispiel der Fig. 3c ist eine im Querschnitt kugelförmige oder teilkugelförmige Außenkontur vorgesehen.

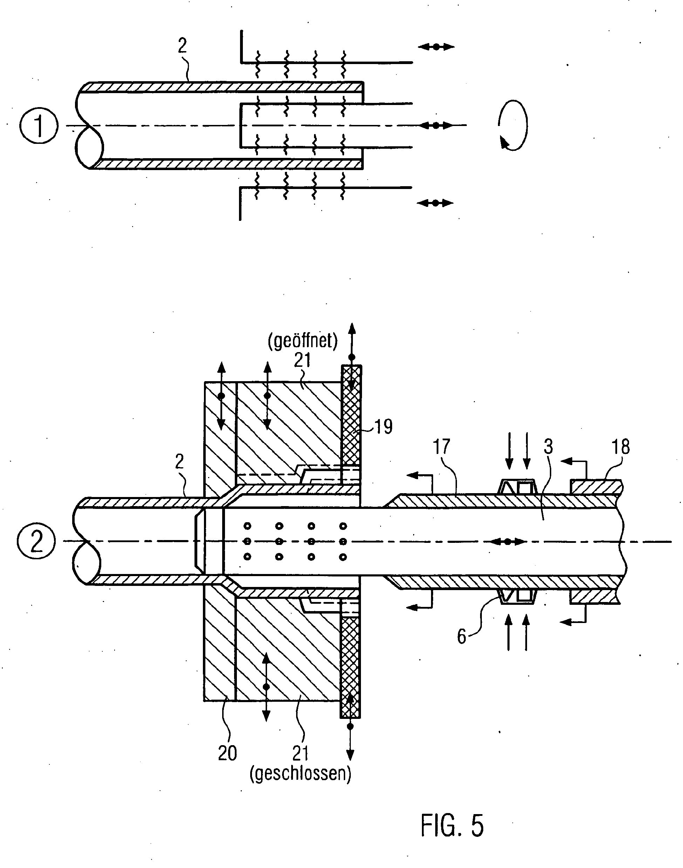

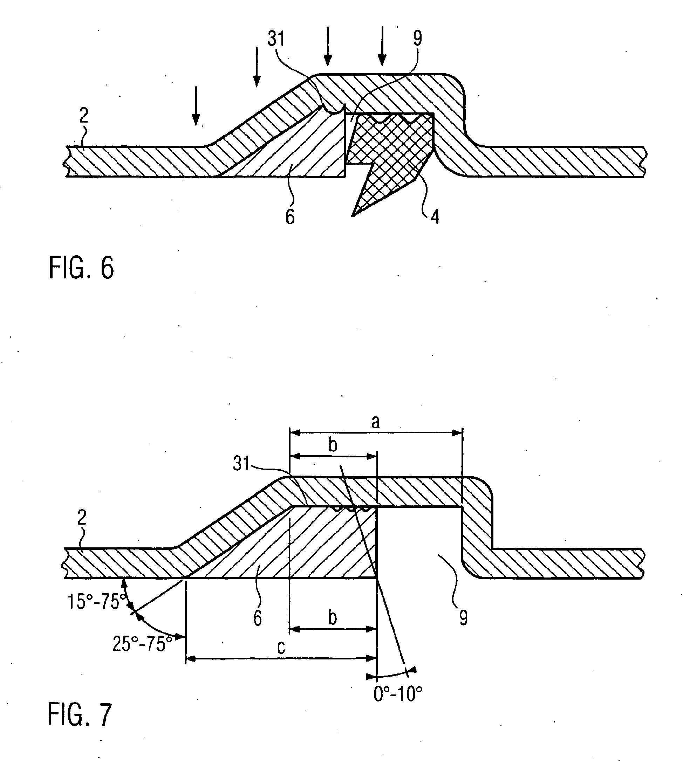

Die Fign. 5 und 6 zeigen Schnittansichten von Ausführungsbeispielen, bei welchen eine Konturierung 31 der zylindrischen Außenfläche des Sickeneinsatzes 6 dargestellt ist. Diese wird, wie durch die Pfeile in Fig. 6 dargestellt, beim Fertigpressen in das Material der Rohrendsteckmuffe eingepresst und führt zu einer Axialsicherung des Sickeneinsatzes. Dieser kann sich somit in Längsrichtung nicht verschieben, auch wenn der Dichtungsring 4 entnommen ist.

Die Konturierung 31 kann, wie in Fig. 6 dargestellt, durch Zacken, zackenförmige Ringnuten oder Ähnliches ausgebildet sein, es ist jedoch auch möglich, am Umfang verteilt Lamellen oder Ähnliches vorzusehen. Die Fig. 7 zeigt die Konturierung in Form einer Riffelung.

Die Fig. 7 zeigt weiterhin bevorzugte Winkelbereiche für die Abschrägung des Sickeneinsatzes 6. Die Vorderkante des Sickeneinsatzes 6 ist beispielsweise in einem spitzen Winkel von 25° bis 75° abgeschrägt. Der Komplementärwinkel zur Achse beträgt 15° bis 75°. Die Abschrägung der Hinterkante, welche der Ringnut 9 zugewandt ist, kann zwischen 0° und 10° betragen. Die dargestellten Größenverhältnisse zwischen Gesamtlänge a des zylindrischen Teils der Sicke 1 und der axialen Länge b des zylindrischen Bereichs des Sickeneinsatzes 6 und der axialen Gesamtlänge c des Sickeneinsatzes 6 ergeben sich aus Fig. 7. Dabei ist es möglich, a gleich c auszubilden, während b jeweils 50% von a bzw. c beträgt. Es versteht sich, dass weitere Abwandlungen erfindungsgemäß möglich sind.

Weiterhin zeigt die Fig. 9, dass der Querschnitt der Ringnut 9 bevorzugterweise weitgehend radienfrei ausgebildet werden kann, wozu insbesondere ein - wie erwähnt - gewählter Winkel des axialen rückseitigen Teils des Sickeneinsatzes 6 beiträgt.

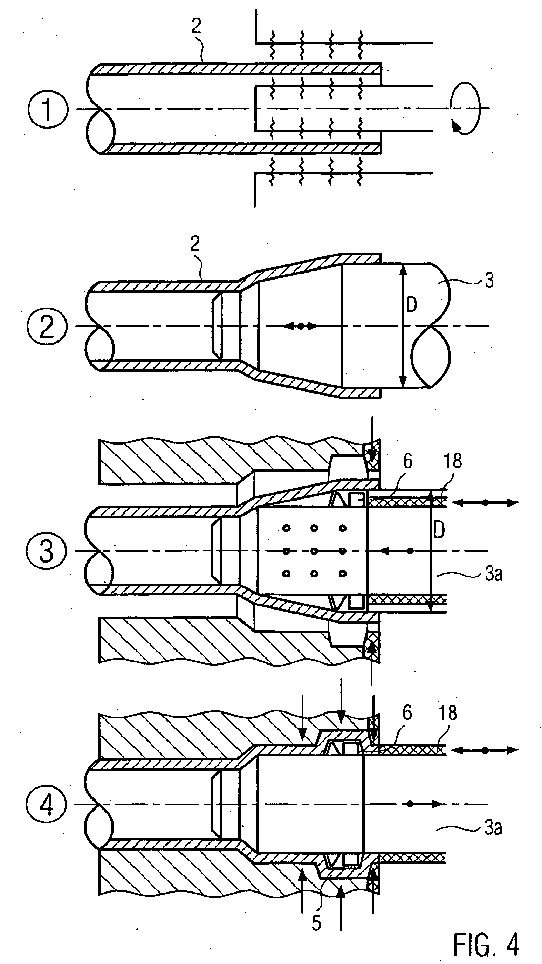

Die Fig. 4 zeigt ein Ausführungsbeispiel, bei welchem die unterschiedlichen Verfahrensschritte dargestellt sind. In dem Verfahrensschritt 1 wird zunächst ein Rohrende 2 innen und außen erwärmt, beispielsweise mittels einer Heizung. Das Rohrende kann dabei gedreht werden. Die Erwärmung erfolgt beispielsweise in einem Bereich zwischen 130° und 170°.

Im Verfahrensschritt 2 wird das erwärmte, thermoplastisch verformbare Rohrende 2 mittels eines Formungselements oder Dorns 3 aufgedornt, um auf diese Weise die Rohrendsteckmuffe vorzuformen.

Im Verfahrensschritt 3 der Fig. 4 wird mittels eines Formungselements oder Dorns 3a ein auf diesen aufgesteckter Sickeneinsatz 6 eingebracht, um auf diese Weise mittels eines schematisch dargestellten Werkzeugs die Außenkontur der Sicke und durch Backen 5 den Muffenhals zu verpressen. Der eingelegte Sickeneinsatz 6 dient dabei als Formungselement.

Der Verfahrensschritt 4 zeigt die Situation in geschlossenem Zustand des Werkzeugs. Dabei wird die Rohrendsteckmuffe geformt und gekühlt. Nachfolgend wird der Dorn 3a herausgezogen, wobei der Sickeneinsatz 6 in der Rohrendsteckmuffe verbleibt.

Nachfolgend erfolgt ein Nachpressen, Kühlen, Endformen und Auswerfen.

Bei der in Fig. 5 schematisch dargestellten Verfahrensvariante erfolgt im Verfahrensschritt 1 ebenfalls ein Erwärmen und Beheizen des Rohrendes analog dem Verfahrensschritt 1 der Fig. 4.

Nachfolgend wird das erwärmte Rohrende 2 in Formbacken positioniert, welche geschlossen werden. Nachfolgend wird ein Dorn 3 (Blasdorn) eingebracht, durch welchen Luft oder Heißluft eingebracht wird. Dabei erfolgt ein Vorblasen und Vorformen des Rohrendes in den nicht ganz geschlossenen Formbacken 21. Nachfolgend wird eine Hülse 17 eingeschoben, auf welcher der Sickeneinsatz 6 aufgesteckt ist. Dieser wird durch das Einschieben der Hülse 17 positioniert. Nachfolgend werden die Backen des Formwerkzeuges 21 restlich geschlossen. Der weitere Ablauf ist wie folgt: Die Backe 19 schließt und fixiert somit den Sickeneinsatz 6. Anschließend fährt der Stauchring (Positions- und Stauchhülse) 18 vor und staucht die Muffen-Stirnseite. Nachfolgend fahren die Hülse 17 und das Formungselement (Dorn) 3 zurück. Nachfolgend fährt der Stauchring (Positions- und Stauchhülse) 18 zurück. Nachfolgend öffnen die Backen 19, die Formbacke 20 sowie die Formbacke 21, so dass das Rohr entformt und in eine Kühl- und Nachpressstation transportiert werden kann.

Nachfolgend erfolgt ein Nachpressen, Kühlen, Endformen und Auswerfen.

Es sind auch Teil-Kombinationen der Verfahren gemäß den Fig. 4 und 5 möglich.

### Bezugszeichenliste

- 1: Sicke der Rohrendsteckmuffe
- 2: Rohrende/Rohr
- 3: Formungselement/Dorn
- 3a: Dorn
- 4: Dichtungsring
- 5: Sicke, Backen
- 6: Sickeneinsatz
- 7: Dichtmittel
- 8: Klemmring
- 9: Ringnut
- 10: Distanzring
- 11: Vorderer Einsatzteil
- 12: Hinterer Einsatzteil
- 13: Rohr
- 14: Innenseite
- 15: Ringnut
- 16: Begrenzungsfläche
- 17: Hülse
- 18: Stauchring (Positions- und Stauchhülse)
- 19: Backe
- 20: Formbacke
- 21: Formbacke
- 30: Sickenkante
- 31: Konturierung
- 32: Sickengrund

## Patentansprüche

1. Verfahren zur Herstellung einer Rohrendsteckmuffe (1) aus einem thermoplastischen teilkristallinen Material, wobei ein Rohrende (2) erwärmt und aufgeweitet wird, wobei nachfolgend ein Formungselement (3) eingebracht wird, wobei das Rohrende (2) zusammen mit dem Formungselement (3) zur Ausbildung einer einen Dichtungsring (4) aufnehmenden Sicke (5) umgeformt wird und wobei das Rohrende (2) in die Endform fertiggepresst wird, **dadurch gekennzeichnet, dass** das Formungselement (3) in Form eines Dorns ausgebildet ist, welcher einen Außendurchmesser aufweist, welcher größer ist, als der zu erzielende Innendurchmesser der fertiggestellten Rohrendsteckmuffe (1), auf welchem ein ringförmiger Sickeneinsatz (6) angeordnet ist, welcher bei einem nachfolgenden Entfernen des Dorns (3) und dem Fertigpressen in der durch den Sickeneinsatz (6) ausgebildeten Sicke (5) verbleibt und eine Ringnut (9) ausbildet, und dass nachfolgend der Dichtungsring (4) lösbar in die Ringnut (9) eingelegt wird.

2. Verfahren nach Anspruch 1, **dadurch gekennzeichnet, dass** vor dem Fertigpressen ein zweiter Dorn eingeschoben wird, dessen Außendurchmesser im Wesentlichen gleich oder geringfügig kleiner dem zu erzielenden Innendurchmesser der Rohrendsteckmuffe (1) ist.

3. Verfahren nach Anspruch 1 oder 2, **dadurch gekennzeichnet, dass** zwischen den Sickeneinsatz (6) und das Rohr (2) Dichtmittel (7) eingebracht werden.

4. Verfahren nach Anspruch 3, **dadurch gekennzeichnet, dass** als Dichtmittel (7) eine Dichtung eingelegt wird.

5. Verfahren nach Anspruch 3, **dadurch gekennzeichnet, dass** als Dichtmittel (7) ein Klebermaterial (Schmelzkleber) eingebracht wird.

6. Verfahren nach einem der Ansprüche 1 bis 5, **dadurch gekennzeichnet, dass** der Sickeneinsatz zur axialen Sicherung formschlüssig mit der Innenwandung der Rohrendsteckmuffe (1) verbunden wird.

7. Verfahren nach einem der Ansprüche 1 bis 6, **dadurch gekennzeichnet, dass** die Sicke (5) vollständig durch den Sickeneinsatz (6) geformt wird.

8. Verfahren nach einem der Ansprüche 1 bis 6, **dadurch gekennzeichnet, dass** die Rohrendsteckmuffe (1) vollständig durch den Sickeneinsatz (6) geformt wird.

9. Verfahren nach einem der Ansprüche 1 bis 6, **dadurch gekennzeichnet, dass** die Sicke (5) teilweise durch den Sickeneinsatz (6) geformt wird.

10. Verfahren nach einem der Ansprüche 1 bis 9, **dadurch gekennzeichnet, dass** der Dichtungsring (4) in eine Ringnut des Sickeneinsatzes (6) eingelegt wird.

11. Verfahren nach einem der Ansprüche 1 bis 9, **dadurch gekennzeichnet, dass** der Dichtungsring (4) neben den Sickeneinsatz (6) in einen durch das Formungselement (3) in der Sicke (5) gebildeten Freiraum eingelegt wird.

12. Verfahren nach einem der Ansprüche 1 bis 11, **dadurch gekennzeichnet, dass** die Ringnut (9) mit einem im Wesentlichen rechteckigen Querschnitt im Wesentlichen radienfrei erzeugt wird.

## Claims

1. A method for producing a pipe end connecting sleeve (1) made of a thermoplastic, partially crystalline material, wherein the pipe end (2) is heated and expanded, wherein subsequently a shaping member (3) is inserted, wherein the pipe end (2), together with the shaping member (3), is reshaped for forming a bead (5) receiving a sealing ring (4), and wherein the pipe end (2) is finally pressed into the final shape, **characterized in that** the shaping member (3) is shaped in the form of a mandrel having an outer diameter that is larger than the obtainable inner diameter of the finished pipe end connecting sleeve (1), on which an annular beaded insert (6) is arranged, which remains in the bead (5) formed by the beaded insert (6) after a removal of the mandrel (3) and the final pressing and forms an annular groove (9), and that subsequently the sealing ring (4) is inserted detachably into the annular groove (9).

2. The method of claim 1, **characterized in that** a second mandrel is inserted before the final pressing, the outer diameter of which is substantially equal or slightly smaller than the obtainable inner diameter of the pipe end connecting sleeve (1).

3. The method of claim 1 or 2, **characterized in that** sealing means (7) are inserted between the beaded insert (6) and the pipe (2).

4. The method of claim 3, **characterized in that** a seal is inserted as the sealing means (7).

5. The method of claim 3, **characterized in that** an adhesive material (hotmelt adhesive) is inserted as the sealing means (7).

6. The method of one of claims 1 to 5, **characterized in that** the beaded insert is connected to the inner wall of the pipe end connecting sleeve (1) in a form-fit manner for an axial securing.

7. The method of one of claims 1 to 6, **characterized in that** the bead (5) is completely formed by the beaded insert (6).

8. The method of one of claims 1 to 6, **characterized in that** the pipe end connecting sleeve (1) is completely formed by the beaded insert (6).

9. The method of one of claims 1 to 6, **characterized in that** the bead (5) is partially formed by the beaded insert (6).

10. The method of one of claims 1 to 9, **characterized in that** the sealing ring (4) is inserted into an annular groove of the beaded insert (6).

11. The method of one of claims 1 to 9, **characterized in that** the sealing ring (4) is inserted into a blank formed by the shaping member (3) in the bead (5) adjacent to the beaded insert (6).

12. The method of one of claims 1 to 11, **characterized in that** the annular groove (9) is produced with a substantially square cross-section and substantially free of radii.

## Revendications

1. Procédé pour fabriquer un manchon emboîtable pour des extrémités de tubes en un matériau thermoplastique semi-cristallin, une extrémité de tube (2) étant chauffée et élargie, un élément de formage (3) étant ensuite introduit, l'extrémité de tube (2) étant formée conjointement avec l'élément de formage (3) pour la réalisation d'un bourrelet (5) recevant un anneau étanche (4) et l'extrémité de tube (2) étant entièrement compressée en la forme finale, **caractérisé en ce que** l'élément de formage (3) est réalisé sous la forme d'une épine qui présente un diamètre extérieur supérieur au diamètre intérieur à obtenir du manchon emboîtable achevé pour des extrémités de tubes (1), sur lequel est disposé un insert à bourrelet (6) annulaire qui reste dans le bourrelet (5) réalisé par l'insert à bourrelet (6) en cas d'éloignement consécutif de l'épine (3) et de compression entière et réalise une rainure annulaire (9) et **en ce que** l'anneau étanche (4) est ensuite introduit de manière amovible dans la rainure annulaire (9).

2. Procédé selon la revendication 1, **caractérisé en ce qu'**avant la compression entière est insérée une seconde épine, dont le diamètre extérieur est essentiellement égal ou légèrement inférieur au diamètre intérieur à obtenir du manchon emboîtable pour des extrémités de tubes (1).

3. Procédé selon la revendication 1 ou 2, **caractérisé en ce que** des moyens étanches (7) sont introduits entre l'insert à bourrelet (6) et le tube (2).

4. Procédé selon la revendication 3, **caractérisé en ce qu'**une garniture est insérée comme moyen étanche (7).

5. Procédé selon la revendication 3, **caractérisé en ce qu'**un matériau de colle (colle fusible) est introduit comme moyen étanche (7).

6. Procédé selon l'une quelconque des revendications 1 à 5, **caractérisé en ce que** l'insert à bourrelet est relié positivement à la paroi intérieure du manchon emboîtable pour des extrémités de tubes (1) pour le blocage axial.

7. Procédé selon l'une quelconque des revendications 1 à 6, **caractérisé en ce que** le bourrelet (5) est entièrement formé par l'insert à bourrelet (6).

8. Procédé selon l'une quelconque des revendications 1 à 6, **caractérisé en ce que** le manchon emboîtable pour extrémités de tubes (1) est entièrement formé par l'insert à bourrelet (6).

9. Procédé selon l'une quelconque des revendications 1 à 6, **caractérisé en ce que** le bourrelet (5) est formé en partie par l'insert à bourrelet (6).

10. Procédé selon l'une quelconque des revendications 1 à 9, **caractérisé en ce que** l'anneau étanche (4) est inséré dans une rainure annulaire de l'insert à bourrelet (6).

11. Procédé selon l'une quelconque des revendications 1 à 9, **caractérisé en ce que** l'anneau étanche (4) est inséré, outre l'insert à bourrelet (6), dans un espace libre formé par l'élément de formage (3) dans le bourrelet (5).

12. Procédé selon l'une quelconque des revendications 1 à 11, **caractérisé en ce que** la rainure annulaire (9) est générée essentiellement sans rayon avec une section transversale essentiellement rectangulaire.
